# EUROPEAN PATENT APPLICATION

(11) **EP 4 700 353 A1**
(43) Date of publication of application: **25.02.2026**
(21) Application number: 25196462.3
(22) Date of filing: 18.08.2025
(51) Int. Cl.: G01M 3/02, G01M 3/18

(54) **CAPACITIVE LEAK DETECTION**

(30) Priority: 19.08.2024 US 202418808981
(71) Applicant: RTX Corporation, Farmington, CT 06032 (US)
(72) Inventor: WARREN, Eli, Farmington, 06032 (US); HACKETT, Bryan J., Farmington, 06032 (US)
(74) Representative: Dehns

(57) **Abstract**

An apparatus for providing leakage monitoring comprises an inner conduit (104) configured to conduct a fluid therethrough. An outer conduit (106) is coaxially located with the inner conduit (104) and surrounds the inner conduit (104). The inner conduit (104) and the outer conduit (106) define a dielectric gap (202) therebetween. A capacitive value defined between the inner conduit (104) and the outer conduit (106) defines a first capacitive value when the inner conduit (104) is not leaking the fluid into the dielectric gap (202) between the inner conduit (104) and the outer conduit (106) and defines a second capacitive value when the inner conduit (104) is leaking the fluid into the dielectric gap (202) between the inner conduit (104) and the outer conduit (106).

## Description

### TECHNICAL FIELD

This disclosure relates generally to leak detection within conduits in engines. More specifically, this disclosure relates to using capacitive monitoring between a first conduit located within a surrounding conduit to detect leaks.

### BACKGROUND

When fluids are flowing through conduits within, for example, a jet turbine engine this can cause problems when leaks develop within the conduit enabling fluids from the conduit to leak into the jet engine. Some existing systems involve conservative design of the jet turbine engine such that leaks within a conduit do not normally have catastrophic effects. Some existing systems for monitoring for leaks normally involve the use of locating sensors specifically dedicated to monitoring for leaks. However, both of the solutions have negative costs such as weight, space, cost, etc. Thus, some manner for monitoring for leak detection that minimizes these costs would be greatly beneficial within jet turbine engine designs.

### SUMMARY

This disclosure relates to a capacitive leak detection of conduits within an engine.

In a first example, an apparatus for providing leakage monitoring comprises an inner conduit configured to conduct a fluid therethrough. An outer conduit is coaxially located with the inner conduit and surrounds the inner conduit. The inner conduit and the outer conduit define a dielectric gap therebetween. A capacitive value defined between the inner conduit and the outer conduit defines a first capacitive value when the inner conduit is not leaking the fluid into the dielectric gap between the inner conduit and the outer conduit and defines a second capacitive value when the inner conduit is leaking the fluid into the dielectric gap between the inner conduit and the outer conduit.

Any single one or any combination of the following features may be used with the examples above. The apparatus further including a protective dielectric layer located between the inner conduit and the outer conduit to prevent the inner conduit from shorting to the outer conduit. The protective dielectric layer further inhibits leaking of the fluid from the inner conduit into the dielectric gap. The protective dielectric layer is located on an outer surface of the inner conduit. The apparatus may include: a connector connected to provide electrical connection to the inner conduit, and an insulative washer located between the connector and the outer conduit to prevent shorting of the outer conduit to the inner conduit through the connector. The apparatus may include: a second connector electrically connected with at least a portion of the connector, a shell surrounding the second connector and electrically connected to the outer conduit, a conductor passing through the shell and electrically connected with the second connector, and an insulative sleeve surrounding the conductor to electrically isolate the conductor from the shell. The apparatus may include a bung attached to the inner conduit passing through the outer conduit and the dielectric gap, a conductor passing through the bung and electrically connecting with the inner conduit, and an insulative sleeve surrounding the bung and the conductor to electrically isolate the conductor from the outer conduit. The apparatus may include a first electrical connection to the outer conduit, and a second electrical connection connected to the inner conduit. The apparatus may include a controller connected to monitor the first electrical connection and the second electrical connection to determine the capacitive value between the outer conduit and the inner conduit.

In a second example of an apparatus for providing leakage monitoring. The apparatus also includes an inner conduit configured to conduct a fluid therethrough; an outer conduit coaxially located with the inner conduit and surrounding the inner conduit, a protective dielectric layer located on a surface of the inner conduit to prevent the inner conduit from shorting to the outer conduit, where the inner conduit and the outer conduit define a dielectric gap therebetween, and where a capacitive value defined between the inner conduit and the outer conduit defines a first capacitive value when the inner conduit is not leaking the fluid into the dielectric gap between the inner conduit and the outer conduit and defines a second capacitive value when the inner conduit is leaking the fluid into the dielectric gap between the inner conduit and the outer conduit

Any single one or any combination of the following features may be used with the examples above. The apparatus where the protective dielectric layer further inhibits leaking of the fluid from the inner conduit into the dielectric gap. The apparatus may include: a connector connected to provide electrical connection to the inner conduit, and an insulative washer located between the connector and the outer conduit to prevent shorting of the outer conduit through the inner conduit through the connector. The apparatus may include: second connector electrically connected with at least a portion of the connector, a shell surrounding the second connector and electrically connected to the outer conduit, a conductor passing through the shell and electrically connected with the second connector, and an insulative sleeve surrounding the conductor to electrically isolate the conductor from the shell. The apparatus may include a bung attached to the inner conduit passing through the outer conduit and the dielectric gap, a conductor passing through the bung and electrically connecting with the inner conduit, and an insulative sleeve surrounding the bung and the conductor to electrically isolate the conductor from the outer conduit. The apparatus may include a first electrical connection to the outer conduit, and a second electrical connection connected to the inner conduit. The apparatus may include a controller connected to monitor the first electrical connection and the second electrical connection to determine the capacitive value between the outer conduit and the inner conduit.

In a third example, a method for detecting fluid leakage from a fluid conduction mechanism. The method also includes locating an inner conduit coaxial within an outer conduit such that a dielectric gap is defined between the inner conduit and the outer conduit; monitoring a capacitive value between the inner conduit and the outer conduit, determining whether there is fluid leakage from the inner conduit into the dielectric gap responsive to the monitored capacitive value, and generating a warning responsive to a determination of fluid leakage responsive to the monitored capacitive value.

Any single one or any combination of the following features may be used with the examples above. The method may include determining a base-line capacitive value when the inner conduit is not leaking. The step of determining further may include comparing the base-line capacitive value to the monitored capacitive value. The method may include placing a protective dielectric layer on an outer surface of the inner conduit to prevent shorting of the inner conduit to the outer conduit.

Other technical features may be readily apparent to one skilled in the art from the following Figs., descriptions, and claims.

### BRIEF DESCRIPTION OF THE DRAWINGS

For a more complete understanding of this disclosure and its advantages, reference is now made to the following description taken in conjunction with the accompanying drawings, in which like reference numerals represent like parts:
Fig. 1 illustrates a perspective view of a fluid conduction mechanism including an inner fluid transporting conduit surrounded by an outer conduit in accordance with this disclosure;
Fig. 2 illustrates a cross-sectional view of the fluid conduction mechanism including inner fluid containing conduit surrounded by the outer conduit and defining a dielectric gap therebetween in accordance with this disclosure;
Fig. 3 illustrates a process for monitoring a capacitive value between an inner fluid transporting conduit and a surrounding outer conduit to detect for fluid leakage in accordance with this disclosure;
Fig. 4 illustrates an interconnection between an inner fluid transporting conduit surrounded by an outer conduit with a typical male fitting connector in accordance with this disclosure;
Fig. 5 illustrates a bung connection to the inner conduit in accordance with this disclosure; and
Fig. 6 illustrates a bung type connection to a manifold connecting to the male fitting connector in accordance with this disclosure.

### DETAILED DESCRIPTION

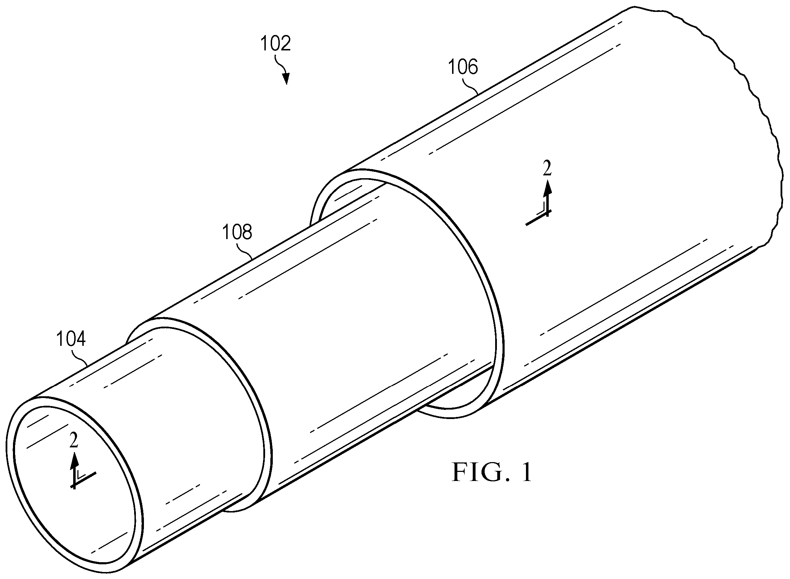

Figs. 1 through 6, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

Fig. 1 illustrates a fluid conduction mechanism 102 that includes an inner conduit 104 that is surrounded by a coaxially located outer conduit 106 in accordance with this disclosure. The inner conduit 104 and outer conduit 106 are made of a conductive material. The inner conduit 104 conducts fluids or gases from one location to another within a jet aircraft turbine engine. The surface of the inner conduit 104 is surrounded by a protective dielectric layer 108. The purpose of the protective dielectric layer 108 is to prevent the inner conduit 104 from shorting with the outer conduit 106 when the fluid conduction mechanism 102 is bent to enable the fluid conduction mechanism to be routed around, for example, a jet aircraft engine. While the following discussions are made with respect to the use of the fluid conduction mechanism 102 within a jet aircraft turbine engine, the fluid conducting mechanism 102 could be utilized in any type of engine or system wherein it would be important to detect the leakage of fluids from the fluid conduction mechanism 102.

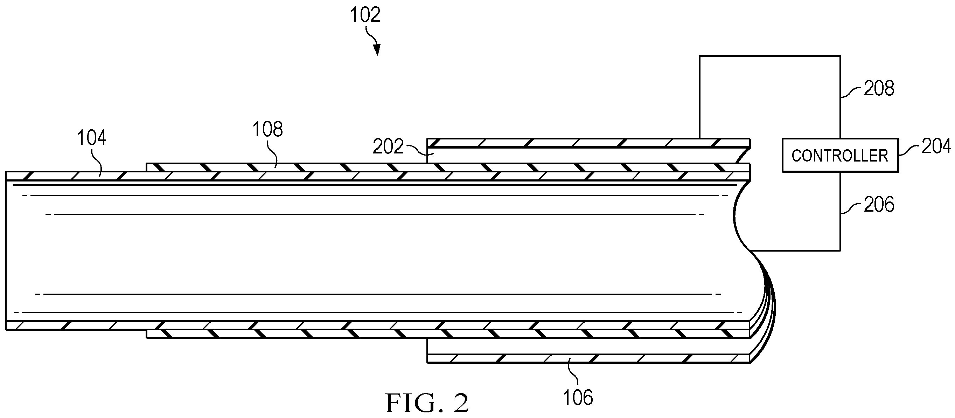

Referring now to Fig. 2 there is illustrated a cross-sectional view along section A-A of the fluid conduction mechanism 102, in accordance with this disclosure, to illustrate that a dielectric gap 202 is defined between dielectric layer 108 of the inner conduit 104 and the outer conduit 106. It will be appreciated while one embodiment includes the use of the dielectric layer 108 upon the outer surface of the inner conduit 104, the dielectric layer 108 could be eliminated or included on the inner surface of the outer conduit 106. The dielectric gap 202 between the inner conduit 104 and outer conduit 106 may in a preferred embodiment be filled with air. However, in alternative embodiments, a material other than air may be included within the dielectric gap 202 in order to provide differing detection sensitivities.

The inner conduit 104, dielectric gap 202 and outer conduit 106 may be used as a capacitor in order to detect the leakage of fluids from the inner conduit 104 into the dielectric gap 202. By monitoring the capacitance between the inner conduit 104 and the outer conduit 106 changes in the capacitance can be used to detect a leak from the inner conduit 104 into the dielectric gap 202. The capacitance is monitored using a controller 204 via a first electrical connection 206 to the inner conduit 104 and a second electrical connection 208 to the outer conduit 106. These electrical connections can be implemented in any known fashion. As mentioned previously, the protective dielectric layer 108 within the dielectric gap 202 prevents electrical shorting between the inner conduit 104 and the outer conduit 106. The protective dielectric layer 108 may also help prevent leakage of fluids from the inner conduit 104 responsive to perforations therein.

The sensitivity of the leak detection can be controlled based on the fluid/gas that is flowing through the inner conduit 104 and the fluid/gas that is used in the dielectric gap 202 between the inner conduit 104 and the outer conduit 106. While the above description has suggested the use of air, other substances may be used within the dielectric gap that create a greater capacitive affect between the inner conduit 104 and the outer conduit 106 based on the fluid/gas flowing through the inner conduit 104 and thus provide better sensitivities.

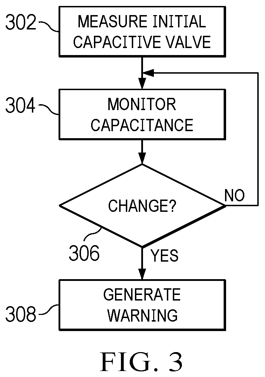

Fig. 3 illustrates a process for monitoring a capacitive value between an inner fluid transporting conduit and a surrounding outer conduit to detect for fluid leakage in accordance with this disclosure When the fluid conduction mechanism 102 is installed within a jet aircraft turbine engine and fluids are being passed through the fluid conduction mechanism, an initial measurement of the capacitance between the inner conduit 104 and the outer conduit 106 is made at step 302. This comprises the base line or non-leakage capacitance value. This capacitance between the inner conduit 104 and outer conduit 106 may then be continuously monitored at step 304 in order to detect changes in capacitance value between the inner conduit 104 and outer conduit 106 when compared with the measured base-line capacitive value. A determination is made at step 306 if the capacitive value has changed. Changes in the capacitive value provide an indication of leakage of material into dielectric gap 202 between the inner conduit 104 and the outer conduit 106. This may cause the generation of a warning at step 308 by an engine controller 204. Otherwise, the capacitive value is further monitored at step 304.

The use of the capacitance between the inner conduit 104 and the outer conduit 106 provides a number of advantages for leakage detection. Since the conduit that is being used for conducting the fluid is used as part of the leakage detection process no additional sensors are needed since the capacitor is made up of the coaxial conduits consisting of the inner conduit 104 and outer conduit 106. The dielectric strength within the dielectric gap 202 is sensitive to contamination assuming oil or fuel is entering a mostly air-filled cavity. The measurements of the capacitive value between the inner conduit 104 and the outer conduit 106 are somewhat temperature independent. This enables monitoring to occur over a wide variety of temperature ranges. Assuming that the outer conduit 106 surrounding the inner conduit 104 is robust, there will be time to shut down the engine after detection of leakage into the dielectric gap 202 before any fluid leaks outside of the fluid conduction mechanism 102. The use of the double-walled fluid conduction mechanism 102 may allow for less conservative mechanical designs within the aircraft engine that can potentially provide savings in weight.

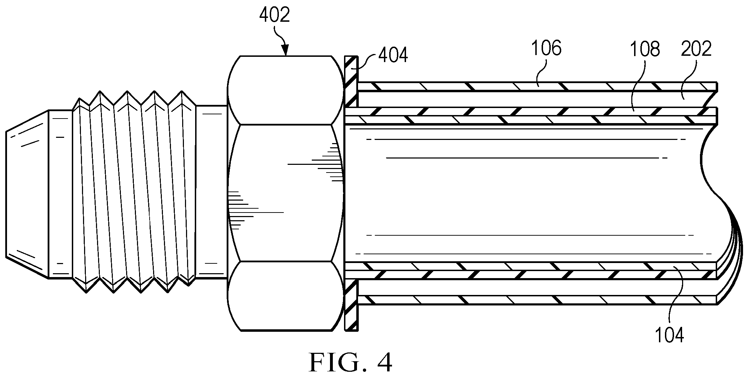

Referring now to Fig. 4, there is illustrated an embodiment wherein a male fitting connector 402 is interfaced to the fluid conduction mechanism 102 using brazing or a compression fitting. The fluid conduction mechanism 102 is abutted next to the male fitting connector 402 such that the inner conduit 104 is in direct electrical contact with the male fitting connector 402. In order to prevent shorting of the inner conduit 104 with the outer conduit 106, an insulated washer 404 is located between the male fitting connector 402 and the outer conduit 106, the dielectric gap 202 and the protective dielectric layer 108. In this way, the male fitting connector 402 is in electrical contact with the inner conduit 104 but does not short the inner conduit 104 to the outer conduit 106. This enables the capacitive monitoring of fluid leakage within the dielectric gap 202 to continue.

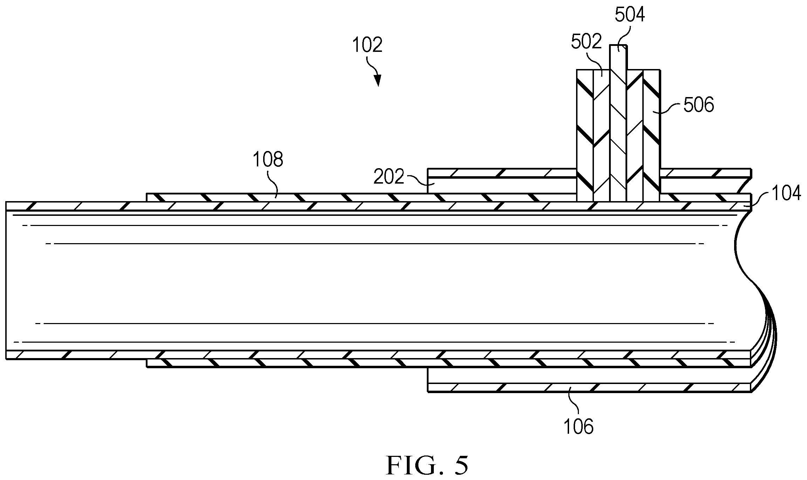

Referring now to Fig. 5, there is illustrated a further embodiment of a connection to the inner conduit 104 using a bung or stopper attachment 502. In this embodiment, a conductor 504 passes through the outer conduit 106 and the dielectric gap 202 to make electrical contact with the inner conduit 104. In order to protect the conductor 504 from shorting the outer conduit 106 to the inner conduit 104, a bung 502 is attached to the inner conduit 104 through which the conductor 504 is inserted. An insulated sleeve 506 surrounds the bung 502 in order to prevent shorting to the outer conduit 106. The conductor 504 may then be used for monitoring the capacitance between the inner conduit 104 and the outer conduit 106. By attaching the conductor 504 at various locations along the inner conduit 104, the fluid conduction mechanism 102 is broken down into subassemblies enabling location-specific fault detection and/or isolation of leak causing failures.

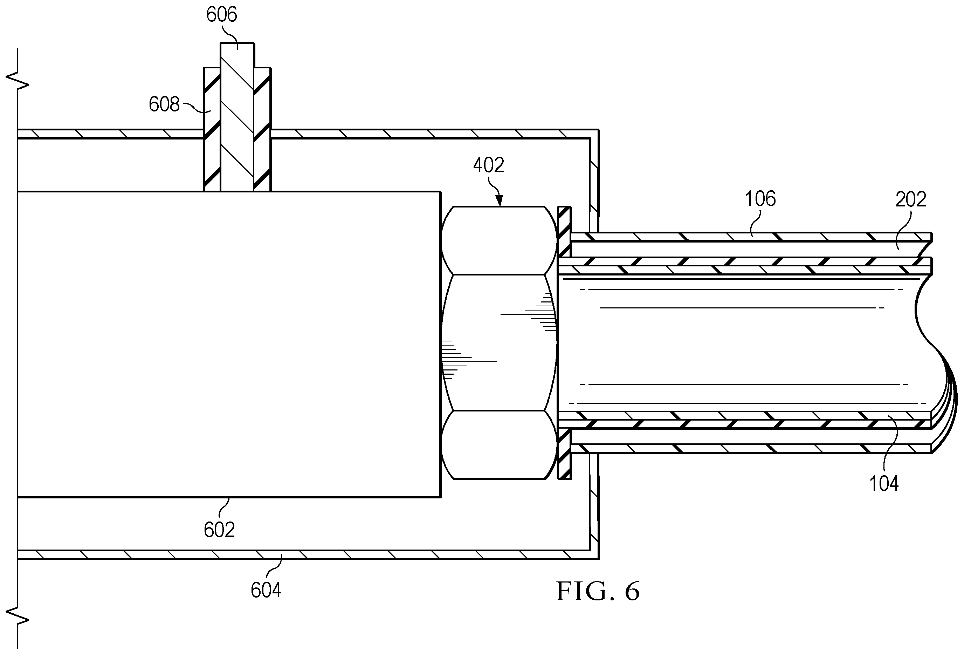

Referring now to Fig. 6, there is illustrated a further embodiment of a connection wherein a manifold/connector 602 is included as part of the leak detection system. As discussed before, the fluid conduction mechanism 102 is interconnected with a male fitting connector 402. The fluid conduction mechanism 102 is abutted next to the male fitting connector 402 such that the inner conduit 104 is in direct electrical contact with the male fitting connector 402. In order to prevent shorting of the inner conduit 104 with the outer conduit 106, an insulated washer 404 is located between the male fitting connector 402 and the outer conduit 106, the dielectric gap 202 and the protective dielectric layer 108. A manifold/connector 602 surrounds the male fitting connector 402 and is electrically connected with the male fitting connector and the inner conduit 104. A shell 604 surrounds the manifold/connector 602 and male fitting connector 402 and electrically contacts the outer conduit 106. In order to provide electrical connection to the inner conduit 104, a conductor 606 is passed through the shell 604 to make electrical contact with the manifold/connector 602. The conductor 606 is electrically isolated from the shell 604 via an insulated sleeve 608. In this way, the voltage with respect to the inner conduit 104 and manifold/connector 602 may be monitored to detect for changes in the capacitance within the dielectric gap 202 without becoming electrically shorted to the outer conduit 106 via the shell 604.

In this manner, the capacitance value between the inner conduit 104 and the outer 2106 may be continuously monitored during engine operation in order to detect the leakage of the fluid into the dielectric gap 202 located between the two coaxially located conduits. This can enable quicker detection of leaks from the inner conduit 104 before catastrophic failure of the engine provides an indication of leakage from the conduit.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. An apparatus for providing leakage monitoring comprising:
an inner conduit configured to conduct a fluid therethrough;
an outer conduit coaxially located with the inner conduit and surrounding the inner conduit;
wherein the inner conduit and the outer conduit define a dielectric gap therebetween; and
wherein a capacitive value defined between the inner conduit and the outer conduit defines a first capacitive value when the inner conduit is not leaking the fluid into the dielectric gap between the inner conduit and the outer conduit and defines a second capacitive value when the inner conduit is leaking the fluid into the dielectric gap between the inner conduit and the outer conduit.

2. The apparatus of Claim 1 further including a protective dielectric layer located between the inner conduit and the outer conduit to prevent the inner conduit from shorting to the outer conduit.

3. The apparatus of Claim 2, wherein the protective dielectric layer further inhibits leaking of the fluid from the inner conduit into the dielectric gap, and/or wherein the protective dielectric layer is located on an outer surface of the inner conduit.

4. The apparatus of Claim 1, 2 or 3, further comprising:
a connector connected to provide electrical connection to the inner conduit; and
an insulative washer located between the connector and the outer conduit to prevent shorting of the outer conduit to the inner conduit through the connector.

5. The apparatus of Claim 4 further comprising:
a second connector electrically connected with at least a portion of the connector;
a shell surrounding the second connector and electrically connected to the outer conduit;
a conductor passing through the shell and electrically connected with the second connector; and
an insulative sleeve surrounding the conductor to electrically isolate the conductor from the shell.

6. An apparatus for providing leakage monitoring comprising:
an inner conduit configured to conduct a fluid therethrough;
an outer conduit coaxially located with the inner conduit and surrounding the inner conduit;
a protective dielectric layer located on a surface of the inner conduit to prevent the inner conduit from shorting to the outer conduit;
wherein the inner conduit and the outer conduit define a dielectric gap therebetween; and
wherein a capacitive value defined between the inner conduit and the outer conduit defines a first capacitive value when the inner conduit is not leaking the fluid into the dielectric gap between the inner conduit and the outer conduit and defines a second capacitive value when the inner conduit is leaking the fluid into the dielectric gap between the inner conduit and the outer conduit.

7. The apparatus of Claim 6, wherein the protective dielectric layer further inhibits leaking of the fluid from the inner conduit into the dielectric gap.

8. The apparatus of Claim 6 or 7 further comprising:
a connector connected to provide electrical connection to the inner conduit; and
an insulative washer located between the connector and the outer conduit to prevent shorting of the outer conduit through the inner conduit through the connector.

9. The apparatus of Claim 8 further comprising:
second connector electrically connected with at least a portion of the connector;
a shell surrounding the second connector and electrically connected to the outer conduit;
a conductor passing through the shell and electrically connected with the second connector; and
an insulative sleeve surrounding the conductor to electrically isolate the conductor from the shell.

10. The apparatus of any preceding claim further comprising:
a bung attached to the inner conduit passing through the outer conduit and the dielectric gap;
a conductor passing through the bung and electrically connecting with the inner conduit; and
an insulative sleeve surrounding the bung and the conductor to electrically isolate the conductor from the outer conduit.

11. The apparatus of any preceding claim further comprising:
a first electrical connection to the outer conduit; and
a second electrical connection connected to the inner conduit.

12. The apparatus of Claim 11 further comprising a controller connected to monitor the first electrical connection and the second electrical connection to determine the capacitive value between the outer conduit and the inner conduit.

13. A method for detecting fluid leakage from a fluid conduction mechanism, comprising:
locating an inner conduit coaxial within an outer conduit such that a dielectric gap is defined between the inner conduit and the outer conduit;
monitoring a capacitive value between the inner conduit and the outer conduit;
determining whether there is fluid leakage from the inner conduit into the dielectric gap responsive to the monitored capacitive value; and
generating a warning responsive to a determination of fluid leakage responsive to the monitored capacitive value.

14. The method of Claim 13 further comprising determining a base-line capacitive value when the inner conduit is not leaking, optionally wherein the step of determining further comprises comparing the base-line capacitive value to the monitored capacitive value.

15. The method of Claim 13 or 14 further comprising placing a protective dielectric layer on an outer surface of the inner conduit to prevent shorting of the inner conduit to the outer conduit.
